(19) **Europäisches Patentamt** / **European Patent Office** / **Office européen des brevets**

(11) **EP 4 546 638 A1**

(12) **EUROPEAN PATENT APPLICATION**

(43) Date of publication:
**30.04.2025  Bulletin 2025/18**

(21) Application number: **23205829.7**

(22) Date of filing: **25.10.2023**

(51) International Patent Classification (IPC):
**H02P 21/32** (2016.01)    **H02P 21/18** (2016.01)
**H02P 6/18** (2016.01)

(52) Cooperative Patent Classification (CPC):
**H02P 6/185; H02P 21/18; H02P 21/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **Kuunsäde, Sina**
  **00380 Helsinki (FI)**
• **Heikkilä, Joni**
  **00380 Helsinki (FI)**
• **Eskola, Matti**
  **00380 Helsinki (FI)**

(74) Representative: **Kolster Oy Ab**
**Salmisaarenaukio 1**
**P.O. Box 204**
**00181 Helsinki (FI)**

(54) **DETERMINING AN INITIAL ANGULAR POSITION OF A ROTOR OF A SALIENT-POLE PERMANENT MAGNET ELECTRICAL MACHINE**

(57)    The present invention relates to the field of electrical machines and methods and arrangements for controlling electrical machines, and more particularly to determining an initial angular position of a rotor of a salient-pole permanent magnet electrical machine. The method for determining an initial angular position of a rotor of a salient-pole permanent magnet electrical machine connected to a frequency converter comprises: performing a first signal injection step, in which first signal injection step an initial angle of the permanent magnet flux axis $\theta_{d,axis,1}$ is determined; performing a DC injection (12) is performed, in which a direct current is injected into an idle permanent magnet electrical machine to a DC injection direction; performing a second signal injection step, in which second signal injection step an angle of the permanent magnet flux axis $\theta_{d,axis,2}$ is determined; and determining (16) the initial angular position of a rotor of a permanent magnet electrical machine.

Fig. 4

EP 4 546 638 A1

**Description**

FIELD OF THE INVENTION

The present invention relates to the field of electrical machines and methods and arrangements for controlling electrical machines, and more particularly to determining an initial angular position of a rotor of a salient-pole permanent magnet electrical machine.

BACKGROUND OF THE INVENTION

Permanent magnet electrical machines, such as permanent magnet assisted synchronous machines and salient pole permanent magnet synchronous motors, are used for a plurality of applications.

Rotating electrical machines are typically controlled using a frequency converter, and for the controlled operation information regarding electrical behaviour of the machine is required. Such information is fed to the controller of the frequency converter in form of electrical parameters of the machine. For field oriented control, an accurate initial rotor position is required as initial state for adjusting the direct-quadrature (dq) coordinate system, torque, and flux/voltage estimation etc. Thus, the errors in the initial rotor position has an impact on the starting of a PMSM drive and may lead to the performance degradation.

Initial rotor position estimation is used for determining the angular position of the magnetic flux of a permanent magnet electrical machine, such as a permanent magnet synchronous motor (PMSM). One known initial rotor position estimation method is the direct current injection method i.e., DC injection, which DC injection is used for intentionally aligning the shaft to an intended direction. In a direct current injection method as a DC current is injected, the permanent magnet flux axis, also referred to as d-axis, aligns with the current direction with the surface mounted permanent magnet (SPM) motors. As a result, after said DC injection the initial rotor position will be the same as the DC current direction.

However, with other permanent magnet electrical machines, e.g. in case of highly salient interior permanent magnet (IPM) motors and permanent magnet assisted synchronous reluctance motors (PMaSynRM), the magnetic flux may not align with the DC current direction.

In this type of permanent magnet electrical machines, the magnetic flux usually turns by the DC direction and settles in a position smaller than 90 degrees further from the DC direction, depending on the saliency. This is referred to as the DC parking of the rotor shaft. Therefore, it is not correct to use the DC direction as the initial position of the magnetic flux.

Different types of AC injection methods also exist in the literature, such as e.g. a voltage pulse signal injection method, a sinusoidal high-frequency (HF) signal injection method and a high-frequency (HF) square-wave signal injection method. However, these methods can give 180 degrees error due to the polarity of the permanent magnet flux. Additionally, these methods usually use the saturation behavior of the motor to find the polarity of the permanent magnet flux.

In the following, prior art will be described with reference to the accompanying figures, of which:

Figure 1A illustrates one example of an angular position of a rotor of a permanent magnet electrical machine before a direct current injection in a rotor angular position estimation method according to the prior art.
Figure 1B illustrates one example of an angular position of a rotor of a permanent magnet electrical machine after a direct current injection in a rotor angular position estimation method according to the prior art.
Figure 2A illustrates another example of an angular position of a rotor of a permanent magnet electrical machine before a direct current injection in a rotor angular position estimation method according to the prior art.
Figure 2B illustrates another example of an angular position of a rotor of a permanent magnet electrical machine after a direct current injection in a rotor angular position estimation method according to the prior art.
Figure 3A illustrates a third example of an angular position of a rotor of a permanent magnet electrical machine before a direct current injection in a rotor angular position estimation method according to the prior art.
Figure 3B illustrates a third example of an angular position of a rotor of a permanent magnet electrical machine after a direct current injection in a rotor angular position estimation method according to the prior art.

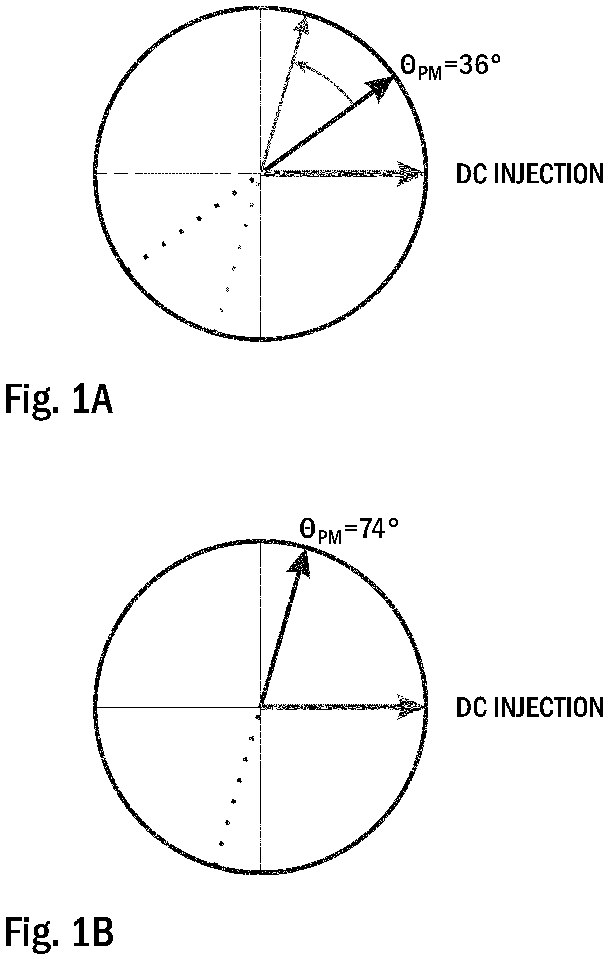

Figure 1A illustrates one example of an angular position of a rotor of a permanent magnet electrical machine before a direct current injection in a rotor angular position estimation method according to the prior art. In Figure 1A an example of DC parking is shown where an angular position of a rotor of a permanent magnet electrical machine before a direct current injection, where DC injection direction is 0 degrees $\theta_{DC,dir} = 0°$, i.e., the initial electrical position of the shaft is 36 degrees $\theta_{PM} = 36°$. As the direct current injection is performed, this will move the magnetic flux further to 74 degrees.

Figure 1B illustrates one example of an angular position of a rotor of a permanent magnet electrical machine after a direct current injection in a rotor angular position estimation method according to the prior art. In DC parking example of Figure 1B an angular position of a rotor of a permanent magnet electrical machine after the direct current injection i.e., the electrical position of the shaft is 74 degrees $\theta_{PM} = 74°$.

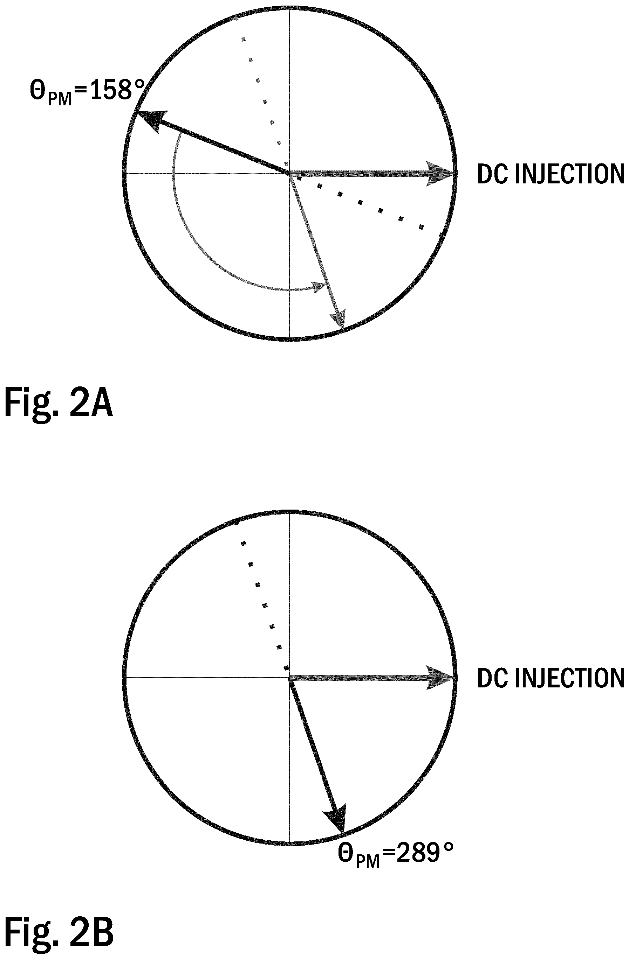

Figure 2A illustrates another example of an angular position of a rotor of a permanent magnet electrical machine before a direct current injection in a rotor angular position estimation method according to the prior art. In Figure 2A another example of DC parking is shown where an angular position of a rotor of a permanent magnet electrical machine before a direct current injection i.e., the initial electrical position of the shaft is 158 degrees $\theta_{PM} = 158°$. As the direct current injection is performed, this will move the magnetic flux further to 289 degrees.

Figure 2B illustrates another example of an angular position of a rotor of a permanent magnet electrical machine after a direct current injection in a rotor angular position estimation method according to the prior art. In another DC parking example of Figure 2B an angular position of a rotor of a permanent magnet electrical machine after the direct current injection i.e., the electrical position of the shaft is 289 degrees $\theta_{PM} = 289°$.

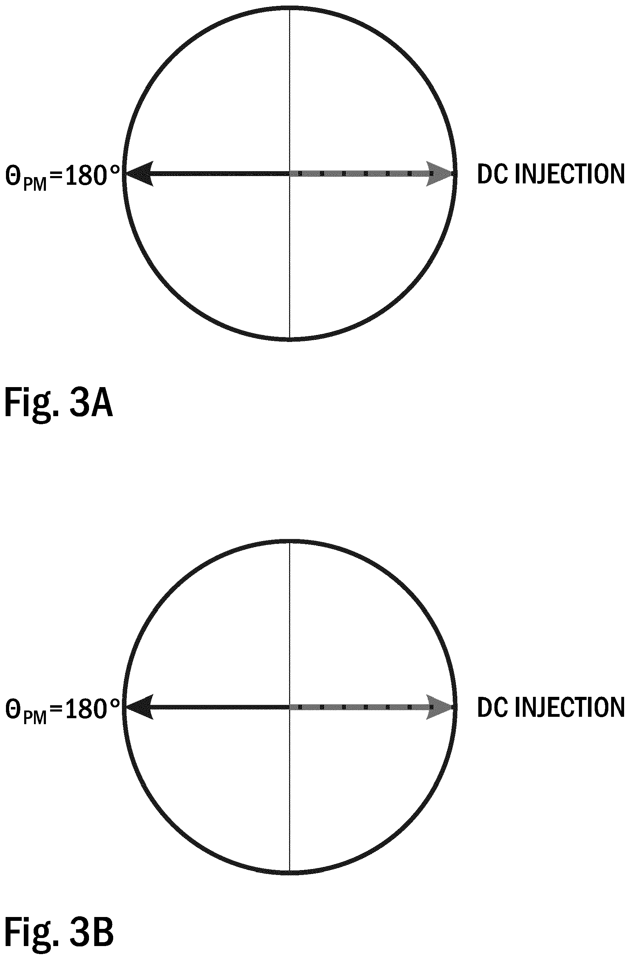

Figure 3A illustrates a third example of an angular position of a rotor of a permanent magnet electrical machine before a direct current injection in a rotor angular position estimation method according to the prior art. In Figure 3A a third example of DC parking is shown where an angular position of a rotor of a permanent magnet electrical machine before a direct current injection i.e., the initial electrical position of the shaft is 180 degrees $\theta_{PM} = 180°$. As the direct current injection is performed, this will not move the angular position of the rotor, i.e. magnetic flux remain at 180 degrees.

Figure 3B illustrates a third example of an angular position of a rotor of a permanent magnet electrical machine after a direct current injection in a rotor angular position estimation method according to the prior art. In the third DC parking example of Figure 3B an angular position of a rotor of a permanent magnet electrical machine after the direct current injection i.e., the electrical position of the shaft remains at 180 degrees $\theta_{PM} = 180°$.

In prior art solutions for determining an initial angular position of a rotor of a salient-pole permanent magnet electrical machine, the main problems are the 180 degrees misalignment of the initial angular position of a rotor of a permanent magnet electrical machine and DC parking behavior of the rotor shaft. Also, in prior art solutions for determining an initial angular position of a rotor of a salient-pole permanent magnet electrical machine, a two-phase current measurement sensor or a three-phase current measurement sensor is needed for measuring the current in the direction of the pulse.

In today's demanding environment, there is a need for a more effective and elegant solution for determining an initial angular position of a rotor of a salient-pole permanent magnet electrical machine, which would be more effective, and which would not require a two-phase current measurement sensor or a three-phase current measurement sensor.

Within the technology, there is a specific need for a method for determining an initial angular position of a rotor of a salient-pole permanent magnet electrical machine that would be more effective compared to the current prior art solutions.

BRIEF DESCRIPTION OF THE INVENTION

The object of the invention is to introduce a method for determining an initial angular position of a rotor of a salient-pole permanent magnet electrical machine, which would be more effective than the current prior art solutions. Advantageous embodiments are furthermore presented.

It is brought forward a new method for determining an initial angular position of a rotor of a salient-pole permanent magnet electrical machine connected to a frequency converter, in which method: a first signal injection step is performed, in which first signal injection step an initial angle of the permanent magnet flux axis $\theta_{d,axis,1}$ is determined; a DC injection is performed, in which DC injection a direct current is injected into an idle salient-pole permanent magnet electrical machine to a DC injection direction $\theta_{DC,dir} = \theta_{d,axis,1} \pm \theta_{add}$, where DC injection direction $\theta_{DC,dir}$ is the angle of injected direct current and added angle $\theta_{add}$ is an angle defining the shift from the initial angle of the permanent magnet flux axis $\theta_{d,axis,1}$; a second signal injection step is performed, in which second signal injection step an angle of the permanent magnet flux axis $\theta_{d,axis,2}$ is determined; and the initial angular position $\hat{\theta}_{init}$ of a rotor of a salient-pole permanent magnet electrical machine is determined as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases}.$$

In a preferred embodiment of said method, in said first signal injection step a first pulse test is performed, in which first pulse test number of external pulses are injected into an idle salient-pole permanent magnet electrical machine at selected angles, the ratio of the current to the flux is measured for each injected pulse, and the initial angle of the permanent magnet flux axis $\theta_{d,axis,1}$ is determined by performing a discrete Fourier transform (DFT, discrete Fourier transform) on the measured ratios; and in said second signal injection step a second pulse test is performed, in which second pulse test number of external pulses are injected into an idle salient-pole permanent magnet electrical machine at selected angles, the ratio of the current to the flux is measured for each injected pulse, and the angle of the permanent magnet flux axis

$\theta_{d,axis,2}$ is determined by performing a discrete Fourier transform (DFT, discrete Fourier transform) on the measured ratios.

In a preferred embodiment of said method, in said first signal injection step said initial angle of the permanent magnet flux axis $\theta_{d,axis,1}$ is determined by utilizing AC injection and/or wherein in said second signal injection step said angle of the permanent magnet flux axis $\theta_{d,axis,2}$ is determined by utilizing AC injection.

In a preferred embodiment of said method, in said first signal injection step said initial angle of the permanent magnet flux axis $\theta_{d,axis,1}$ is determined by utilizing voltage pulses signal injection and/or wherein in said second signal injection step said angle of the permanent magnet flux axis $\theta_{d,axis,2}$ is determined by utilizing voltage pulses signal injection.

In a preferred embodiment of said method, in said first signal injection step said initial angle of the permanent magnet flux axis $\theta_{d,axis,1}$ is determined by utilizing sinusoidal high-frequency (HF) signal injection or high-frequency (HF) square wave signal injection and/or wherein in said second signal injection step said angle of the permanent magnet flux axis $\theta_{d,axis,2}$ is determined by utilizing sinusoidal high-frequency (HF) signal injection or high-frequency (HF) square wave signal injection.

In a preferred embodiment of said method, said added angle $\theta_{add}$ is 90 degrees.

In a preferred embodiment of said method, said added angle $\theta_{add}$ is between 50 - 130 degrees.

In a preferred embodiment of said method, said added angle $\theta_{add}$ is between 30 - 150 degrees.

In a preferred embodiment of said method, said first pulse test and/or said second pulse test is/are performed as a six-pulse test, in which six-pulse test the ratio of the current to the flux is measured with the pulses at angles of 0, 60, 120, 180, 240 and 300 degrees.

In a preferred embodiment of said method, six voltage pulses are produced in an order that minimizes the possibility of rotating the rotor of the salient-pole permanent magnet electrical machine.

Furthermore, it is brought forward a new frequency converter adapted to be connected to a salient-pole permanent magnet electrical machine, the frequency converter comprising means configured to determine an initial angular position of a rotor of a salient-pole permanent magnet electrical machine by: performing first signal injection step, in which first signal injection step an initial angle of the permanent magnet flux axis $\theta_{d,axis,1}$ is determined; performing a DC injection, in which DC injection a direct current is injected into an idle salient-pole permanent magnet electrical machine to a DC injection direction $\theta_{DC,dir} = \theta_{d,axis,1} \pm \theta_{add}$, where DC injection direction $\theta_{DC,dir}$ is the angle of injected direct current and added angle $\theta_{add}$ is an angle defining the shift from the initial angle of the permanent magnet flux axis $\theta_{d,axis,1}$; performing second signal injection step, in which second signal injection step an angle of the permanent magnet flux axis $\theta_{d,axis,2}$ is determined by; and determining the initial angular position $\hat{\theta}_{init}$ of a rotor of a permanent magnet electrical machine as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases}.$$

In a preferred embodiment of said frequency converter, in performing said first signal injection step said frequency converter comprises means configured to perform a first pulse test, in which first pulse test number of external pulses are injected into an idle salient-pole permanent magnet electrical machine at selected angles, the ratio of the current to the flux is measured for each injected pulse, and the initial angle of the permanent magnet flux axis $\theta_{d,axis,1}$ is determined by performing a discrete Fourier transform (DFT, discrete Fourier transform) on the measured ratios; and in performing said second signal injection step said frequency converter comprises means configured to perform a second pulse test, in which second pulse test number of external pulses are injected into an idle salient-pole permanent magnet electrical machine at selected angles, the ratio of the current to the flux is measured for each injected pulse, and the angle of the permanent magnet flux axis $\theta_{d,axis,2}$ is determined by performing a discrete Fourier transform (DFT, discrete Fourier transform) on the measured ratios.

In a preferred embodiment of said frequency converter, in performing said first signal injection step said frequency converter comprises means configured to determine said initial angle of the permanent magnet flux axis $\theta_{d,axis,1}$ utilizing AC injection, voltage pulses signal injection, sinusoidal high-frequency (HF) signal injection or high-frequency (HF) square wave signal injection and/or wherein in performing said second signal injection step said frequency converter comprises means configured to determine said angle of the permanent magnet flux axis $\theta_{d,axis,2}$ utilizing AC injection, voltage pulses signal injection, sinusoidal high-frequency (HF) signal injection or high-frequency (HF) square wave signal injection.

In a preferred embodiment of said first pulse test and/or said second pulse test is/are performed as a six-pulse test, in which six-pulse test the ratio of the current to the flux is measured with the pulses at angles of 0, 60, 120, 180, 240 and 300 degrees.

Furthermore, it is brought forward a new computer program product comprising computer program code, wherein the execution of the program code in a computer causes the computer of said new frequency converter causes the computer to carry out the steps of said new method.

BRIEF DESCRIPTION OF THE DRAWINGS

In the following, the present invention will be described in more detail by way of example and with reference to the attached drawings, in which:

Figure 1A illustrates one example of an angular position of a rotor of a salient-pole permanent magnet electrical machine before a direct current injection in a rotor angular position estimation method according to the prior art.
Figure 1B illustrates one example of an angular position of a rotor of a salient-pole permanent magnet electrical machine after a direct current injection in a rotor angular position estimation method according to the prior art.
Figure 2A illustrates another example of an angular position of a rotor of a salient-pole permanent magnet electrical machine before a direct current injection in a rotor angular position estimation method according to the prior art.
Figure 2B illustrates another example of an angular position of a rotor of a salient-pole permanent magnet electrical machine after a direct current injection in a rotor angular position estimation method according to the prior art.
Figure 3A illustrates a third example of an angular position of a rotor of a salient-pole permanent magnet electrical machine before a direct current injection in a rotor angular position estimation method according to the prior art.
Figure 3B illustrates a third example of an angular position of a rotor of a salient-pole permanent magnet electrical machine after a direct current injection in a rotor angular position estimation method according to the prior art.

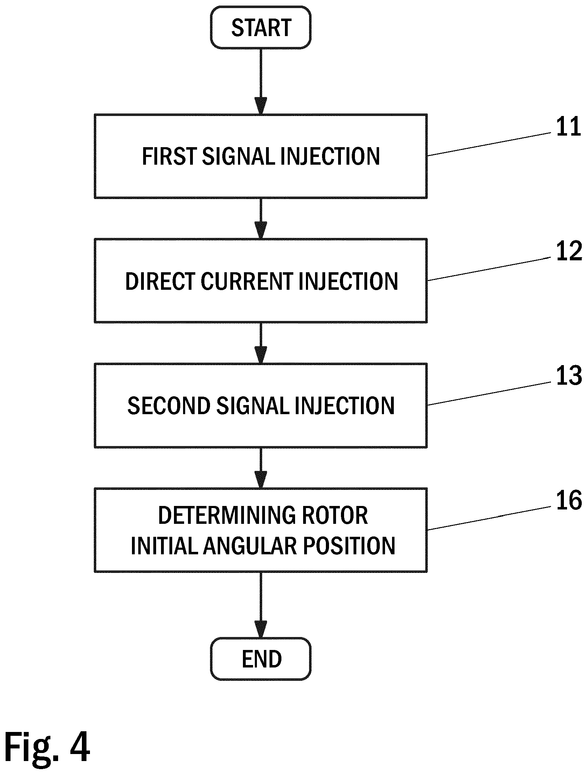

Figure 4 illustrates a flow diagram of an embodiment of a method for determining an initial angular position of a rotor of a salient-pole permanent magnet electrical machine according to the present invention.

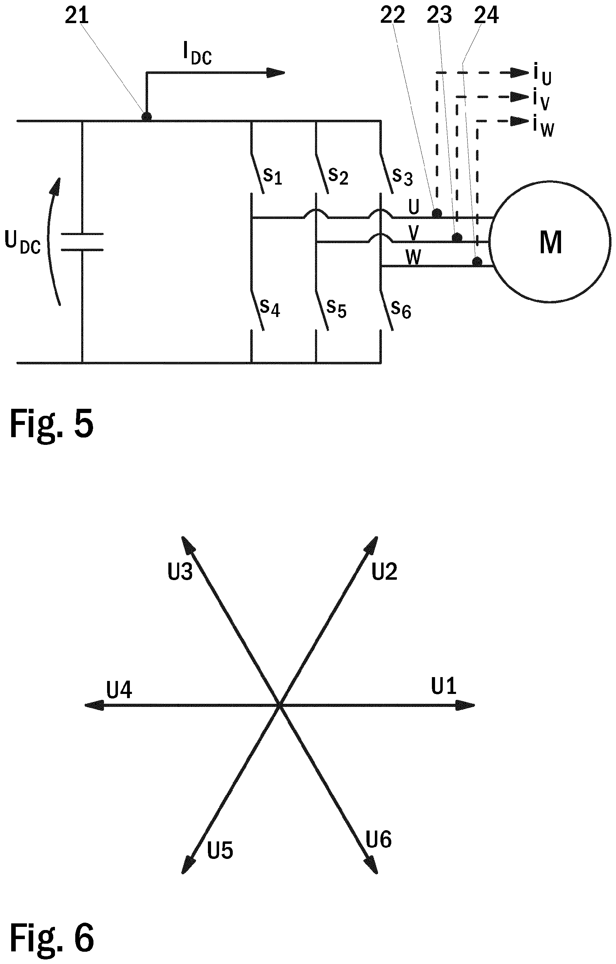

Figure 5 illustrates a simplified structure of an embodiment of an inverter of a frequency converter according to the present invention.
Figure 6 illustrates voltage vectors obtained with the inverter of Figure 5.

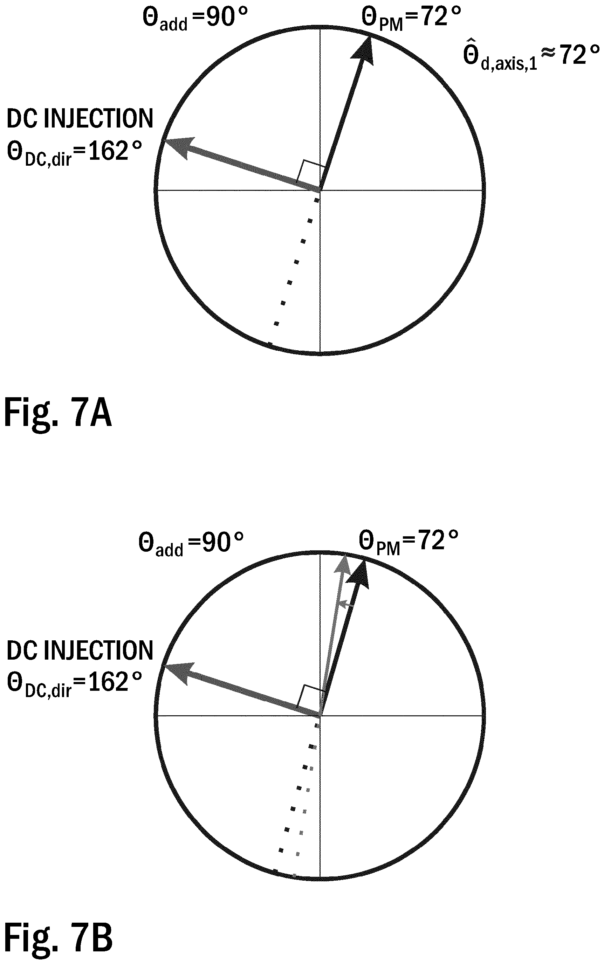

Figure 7A illustrates an embodiment of an angular position of a rotor of a salient-pole permanent magnet electrical machine after a first signal injection according to the present invention.
Figure 7B illustrates an embodiment of an angular position of a rotor of a salient-pole permanent magnet electrical machine before and after a direct current injection according to the present invention.

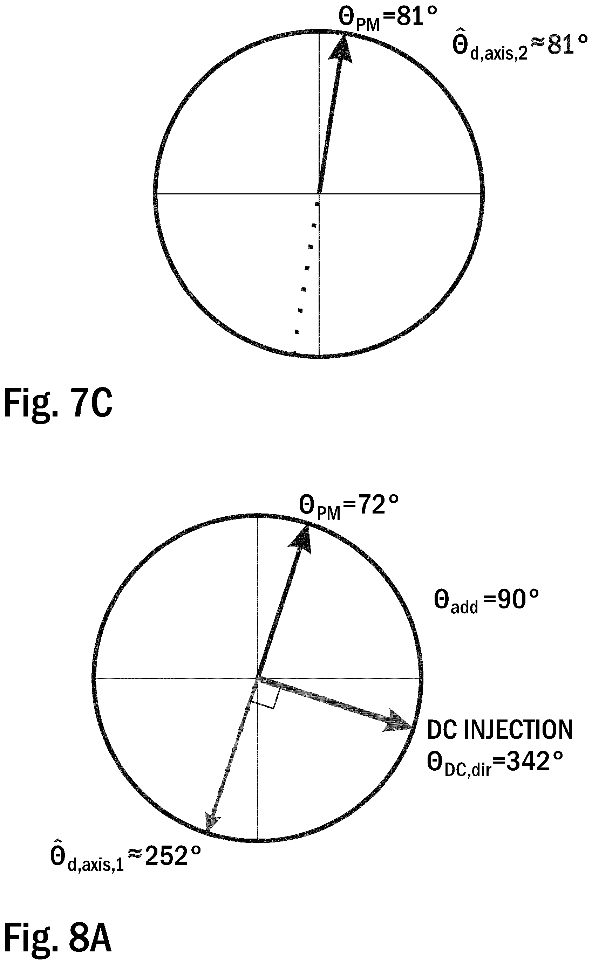

Figure 7C illustrates an embodiment of an angular position of a rotor of a salient-pole permanent magnet electrical machine after a second signal injection according to the present invention.
Figure 8A illustrates another embodiment of an angular position of a rotor of a salient-pole permanent magnet electrical machine after a first signal injection according to the present invention.

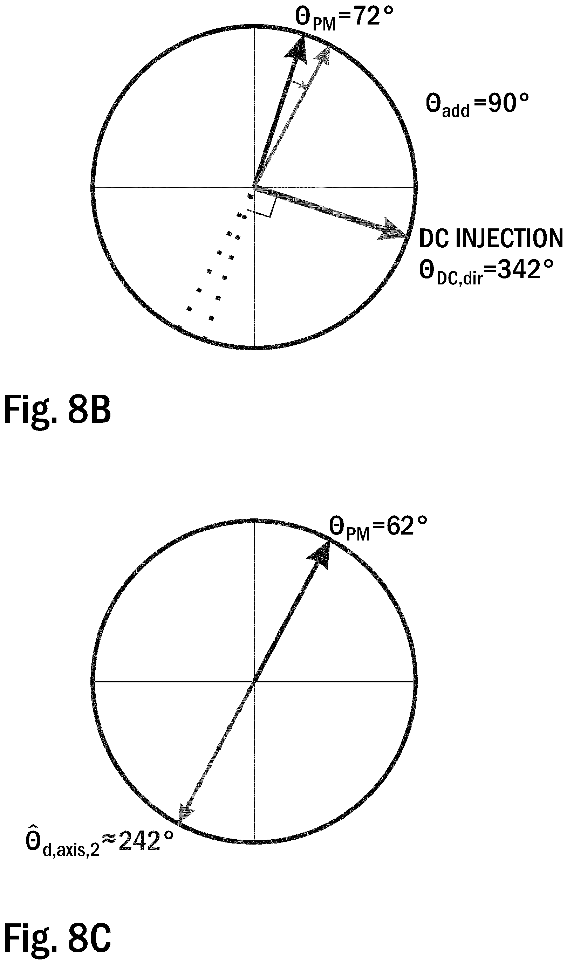

Figure 8B illustrates another embodiment of an angular position of a rotor of a salient-pole permanent magnet electrical machine before and after a direct current injection according to the present invention.
Figure 8C illustrates another embodiment of an angular position of a rotor of a salient-pole permanent magnet electrical machine after a second signal injection according to the present invention.

The foregoing aspects, features and advantages of the invention will be apparent from the drawings and the detailed description related thereto.
The prior art drawings of Figures 1A to 3B have been presented earlier. In the following, the invention will be described in greater detail by means of preferred embodiments with reference to the accompanying drawings of Figures 4 to 9.

DETAILED DESCRIPTION

In the method according to the present invention for determining an initial angular position of a rotor of a salient-pole permanent magnet electrical machine connected to a frequency converter: a first signal injection step is performed, in which first signal injection step an initial angle of the permanent magnet flux axis $\theta_{d,axis,1}$ is determined; a DC injection is performed, in which DC injection a direct current is injected into an idle salient-pole permanent magnet electrical machine to a DC injection direction $\theta_{DC,dir} = \theta_{d,axis,1} \pm \theta_{add}$, where DC injection direction $\theta_{DC,dir}$ is the angle of injected direct current and added angle $\theta_{add}$ is an angle defining the shift from the initial angle of the permanent magnet flux axis $\theta_{d,axis,1}$; a second signal injection step is performed, in which second signal injection step an angle of the permanent magnet flux axis after the DC injection $\theta_{d,axis,2}$ is determined; and the initial angular position $\hat{\theta}_{init}$ of a rotor of a salient-pole permanent magnet electrical machine is determined as:

$$\hat{\theta}_{init} = \begin{cases} \hat{\theta}_{d,axis,2}, & 180° - \left|\left|\hat{\theta}_{d,axis,2} - \theta_{DC,dir}\right| - 180°\right| \leq 90° \\ \hat{\theta}_{d,axis,2} - 180°, & otherwise \end{cases}.$$

Figure 4 illustrates a flow diagram of an embodiment of a method for determining an initial angular position of a rotor of a salient-pole permanent magnet electrical machine according to the present invention. In the presented embodiment said salient-pole permanent magnet electrical machine is connected to a frequency converter. Said frequency converter may have a current measurement with current sensor/sensors in the intermediate voltage circuit and/or in the three-phase output. In the method according to the present embodiment, a first signal injection 11 is first performed as a first pulse test 11.

In the first pulse test 11 an external pulse (i.e., external flux) is injected into an idle salient-pole permanent magnet electrical machine. When the harmonics, saturation and core losses are ignored, the ratio of the current to the flux in the direction of the pulse can be expressed as

$$\frac{i_s}{\psi_s} = \frac{1}{2}\left(\frac{1}{L_d} + \frac{1}{L_q}\right) + \frac{1}{2}\left(\frac{1}{L_d} - \frac{1}{L_q}\right)\cos(2(\theta - \theta_{d,axis})) \qquad (1)$$

where $\theta$ is the angle of the external pulse and $\theta_{d,axis}$ is an angle of the permanent magnet flux axis. The angle of the permanent magnet flux axis $\theta_{d,axis}$ is the angle of d-axis i.e., the electrical angular position of the rotor in stator reference frame.

With the help of the first pulse test 11 the initial angle of the permanent magnet flux axis $\theta_{d,axis,1}$ is found. The initial angle of the permanent magnet flux axis $\theta_{d,axis,1}$ is the initial angle of d-axis $\theta_{d,axis,1}$ i.e., the initial electrical angular position of the rotor in stator reference frame.

In the first pulse test 11 the voltage pulses are produced at selected angles, and with each pulse the current is measured, and the permanent magnet flux is estimated. Thereafter, the ratios of the current to the flux are calculated with the pulses at selected angles. Thereafter, the inductance values $L_d$, $L_q$ and the initial angle of d-axis $\theta_{d,axis,1}$ are determined by performing a discrete Fourier transform (DFT, discrete Fourier transform) on the measured ratios.

In an embodiment, the first pulse test 11 is carried out as a six-pulse test. In said six-pulse test the ratio of the current to the flux is measured with the pulses at angles of 0, 60, 120, 180, 240 and 300 degrees, the inductance values $L_d$, $L_q$ and the initial angle of d-axis $\theta_{d,axis,1}$ are determined by performing a discrete Fourier transform (DFT, discrete Fourier transform) on the measured ratios. An example of performing a six pulse test is further explained in a European Patent specification EP 3 220 535 B1. Said initial angle of d-axis $\theta_{d,axis,1}$ is determined as wrapped around 0° and 360°, i.e. $0° \leq \theta_{d,axis,1} \leq 360°$.

Here a general equation for wrapping an angle around 0° and 360° is defined as:

$$n = \left[\frac{|\theta|}{360}\right]$$

$$\theta = \begin{cases} \theta - 360n, & \theta > n \times 360 \\ \theta + 360(n+1), & \theta < -n \times 360 \\ \theta, & otherwise \end{cases}$$

After performing the first signal injection 11 and determining the initial angle of d-axis $\theta_{d,axis,1}$, a direct current injection 12 is performed to move and park the shaft into a new position (DC, direct current).

In the direct current injection 12 a DC current of low amplitude (e.g., 0.5 times the nominal current value) is injected into an idle salient-pole permanent magnet electrical machine to a DC injection direction defined as

$$\theta_{DC,dir} = \theta_{d,axis,1} \pm \theta_{add} \qquad (2)$$

where DC injection direction $\theta_{DC,dir}$ is the angle of injected direct current and added angle $\theta_{add}$ is an angle defining the shift from the initial angle of the permanent magnet flux. Said DC injection direction $\theta_{DC,dir}$ is determined as wrapped around 0° and 360°, i.e. $0° \leq \theta_{DC,dir} \leq 360°$.

In an embodiment, the added angle $\theta_{add}$ is between 30 - 150 degrees. In another embodiment, the added angle $\theta_{add}$ is between 50 - 130 degrees. In yet another embodiment, the added angle $\theta_{add}$ is 90 degrees.

It has been observed from the simulations and laboratory measurements that the direct current injection 12 guarantees the movement of the shaft and DC parking within 90 degrees (± 90 °) from the DC direction.

After performing the direct current injection 12, a second signal injection 13 is performed. In the method according to the present embodiment, said second signal injection 13 is performed as a second pulse test 13.

In the second pulse test 13 an external pulse (i.e., external flux) is injected into an idle salient-pole permanent magnet electrical machine. With the help of the second pulse test 13 the angle of the permanent magnet flux axis $\theta_{d,axis,2}$ is found. Said angle of the permanent magnet flux axis $\theta_{d,axis,2}$ is determined as wrapped around 0° and 360°, i.e. $0° \leq \theta_{d,axis,2} \leq 360°$. The angle of the permanent magnet flux axis $\theta_{d,axis,2}$ is the angle of d-axis after the DC injection $\theta_{d,axis,2}$ i.e., the electrical angular position of the rotor in stator reference frame after the DC injection.

In the second pulse test 13 the voltage pulses are produced at selected angles, and with each pulse the current is measured, and the permanent magnet flux is estimated. Thereafter, the ratios of the current to the flux are calculated with the pulses at selected angles. Thereafter, the inductance values $L_d$, $L_q$ and the angle of d-axis after the DC injection $\theta_{d,axis,2}$ are determined by performing a discrete Fourier transform (DFT, discrete Fourier transform) on the measured ratios.

In an embodiment, the second pulse test is carried out as a six-pulse test. In said six-pulse test the ratio of the current to the flux is measured with the pulses at angles of 0, 60, 120, 180, 240 and 300 degrees, the inductance values $L_d$, $L_q$ and the angle of d-axis after the DC injection $\theta_{d,axis,2}$ are determined by performing a discrete Fourier transform (DFT, discrete Fourier transform) on the measured ratios.

After performing the second signal injection 13, the initial angular position of a rotor of a salient-pole permanent magnet electrical machine is determined 16 as:

$$\hat{\theta}_{init} = \begin{cases} \hat{\theta}_{d,axis,2} \, , & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases} \tag{3}$$

where $\hat{\theta}_{init}$ is the initial angular position of a rotor of a salient-pole permanent magnet electrical machine.

Figure 5 illustrates a simplified structure of an embodiment of an inverter of a frequency converter according to the present invention. Figure 5 shows a three-phase inverter of a frequency converter and the load connected to the output phases. The presented frequency converter is equipped with a current measurement sensor 21 in the intermediate voltage circuit. With the help of the present invention the use of a two-phase current measurement sensor or of a three-phase current measurement sensor is not required. In an alternative solution, the presented frequency converter may comprise a two-phase current measurement sensor or a three-phase current measurement sensor in the intermediate voltage circuit output instead of or in addition to said current measurement sensor 21 in the intermediate voltage circuit. In Figure 5, the presented frequency converter may have three-phase current measurement sensors 22-24 in the three-phase output as indicated by dashed lines and reference numbers 22-24.

In the method of the present invention voltage pulses are produced or generated with the frequency converter to the salient-pole permanent magnet electrical machine. With reference to Figure 5, the voltage pulses are produced by selecting suitable switch combinations using the output switches s1-s6 of the frequency converter. The voltage pulses are produced to each output phase of the frequency converter and thus to each phase of the connected machine. For example, by closing switches s1, s5 and s6 a voltage pulse is generated to output phase U and the magnitude of the voltage pulse is the voltage of the intermediate voltage circuit Udc. With the six output switches six different active combinations of the switch states is obtained.

Figure 6 illustrates voltage vectors obtained with the inverter of Figure 5. In Figure 6 the switch combinations are presented as voltage vectors in which the above mentioned switch combination (s1, s5 and s6 closed) corresponds to vector U1.

In the method of the present invention voltage pulses are produced to each phase of the machine. This means that voltage vectors U1 to U6 are generated. As six voltage pulses are produced, these include a positive and a negative pulse for each phase.

The pulses are preferably produced in an order that minimizes the possibility of rotating the rotor of the machine. Presented in vectors shown in Figure 6, such an order is, for example, U1, U4, U2, U5, U3, U6. The consecutive voltage vectors are selected to be in as opposite direction as possible so that the produced voltages are not able to produce a rotating magnetic flux in the machine which could rotate the rotor of the machine. In the presented embodiment of Figure 6 the average torque at the end of the produced pulses is zero. This minimizes the shaft movements.

Figure 7A illustrates an embodiment of an angular position of a rotor of a salient-pole permanent magnet electrical machine after a first signal injection according to the present invention. In the start of the method of the present invention the initial angular position of a rotor is not known. As shown in Figure 7A an angular position of a rotor of a salient-pole permanent magnet electrical machine after a first signal injection and before a direct current injection i.e., the initial electrical position of the shaft is 72 degrees $\theta_{PM}$ = 72°. In the start of the method of the present invention the first signal injection step is performed for finding out the initial angle of the permanent magnet flux axis $\theta_{d,axis,1}$. Respectively, the first signal injection step gives us the result for the initial angle of the permanent magnet flux axis $\hat{\theta}_{d,axis,1}$ as 72 degrees $\hat{\theta}_{d,axis,1}$ = 72°. So in this stage we know only that the initial electrical position of the shaft is either 72 degrees $\theta_{PM}$ = 72° or 72 degrees plus 180 degrees $\theta_{PM}$ = 72° + 180° = 252°.

In the next step of the method the DC injection is performed to move and park the shaft into a new position, in which a direct current is injected to a DC injection direction $\theta_{DC,dir}$ = $\theta_{d,axis,1}$ ± $\theta_{add}$. The added angle $\theta_{add}$ is an angle defining the shift from the initial angle of the permanent magnet flux axis $\theta_{d,axis,1}$. In the present embodiment, the added angle $\theta_{add}$ is 90 degrees. Respectively, the DC injection direction $\theta_{DC,dir}$ is 162 degrees $\theta_{DC,dir}$ = 162°.

Figure 7B illustrates an embodiment of an angular position of a rotor of a salient-pole permanent magnet electrical machine before and after a direct current injection according to the present invention. In Figure 7B As the direct current injection is performed, this will move the shaft and move the magnetic flux from 72 degrees to 81 degrees. In this stage we do not know the angular position of a rotor after the DC injection. Respectively, in the method of the present invention the second signal injection step is performed for finding out the angle of the permanent magnet flux axis $\theta_{d,axis,2}$.

Figure 7C illustrates an embodiment of an angular position of a rotor of a salient-pole permanent magnet electrical machine after a second signal injection according to the present invention. In Figure 7C an angular position of a rotor of a salient-pole permanent magnet electrical machine after a second signal injection i.e., the electrical position of the shaft is 81 degrees $\theta_{PM}$ = 81°. Respectively, the angle of the permanent magnet flux axis $\hat{\theta}_{d,axis,2}$ is 81 degrees $\hat{\theta}_{d,axis,2}$ = 81°. In the final step of the method of the present invention the initial the initial angular position $\hat{\theta}_{init}$ of a rotor of a salient-pole permanent magnet electrical machine is determined as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases},$$

this giving us the result that the initial angular position $\hat{\theta}_{init}$ of the rotor is 81 degrees $\hat{\theta}_{init}$ = 81°.

Figure 8A illustrates another embodiment of an angular position of a rotor of a salient-pole permanent magnet electrical machine after a first signal injection according to the present invention. In the start of the method of the present invention the initial angular position of a rotor is not known. As shown in Figure 8A an angular position of a rotor of a salient-pole permanent magnet electrical machine after a first signal injection and before a direct current injection i.e., the initial electrical position of the shaft is 72 degrees $\theta_{PM}$ = 72°. In the start of the method of the present invention the first signal injection step is performed for finding out the initial angle of the permanent magnet flux axis $\theta_{d,axis,1}$. Respectively, the first signal injection step gives us the result for the initial angle of the permanent magnet flux axis $\hat{\theta}_{d,axis,1}$ as 252 degrees $\hat{\theta}_{d,axis,1}$ = 252°. So in this stage we know only that the initial electrical position of the shaft is either 252 degrees $\theta_{PM}$ = 252° or 252 degrees minus 180 degrees $\theta_{PM}$ = 252° - 180° = 72°.

In the next step of the method the DC injection is performed to move and park the shaft, in which a direct current is injected to a DC injection direction $\theta_{DC,dir}$ = $\theta_{d,axis,1}$ ± $\theta_{add}$. The added angle $\theta_{add}$ is an angle defining the shift from the initial angle of the permanent magnet flux axis $\theta_{d,axis,1}$. In the present embodiment, the added angle $\theta_{add}$ is 90 degrees. Respectively, the DC injection direction $\theta_{DC,dir}$ is 342 degrees $\theta_{DC,dir}$ = 342°.

Figure 8B illustrates another embodiment of an angular position of a rotor of a salient-pole permanent magnet electrical machine before and after a direct current injection according to the present invention. In Figure 8B As the direct current injection is performed, this will move the shaft and move the magnetic flux from 72 degrees to 62 degrees. In this stage we do not know the angular position of a rotor after the DC injection. Respectively, in the method of the present invention the second signal injection step is performed for finding out the angle of the permanent magnet flux axis $\theta_{d,axis,2}$.

Figure 8C illustrates another embodiment of an angular position of a rotor of a salient-pole permanent magnet electrical machine after a second signal injection according to the present invention. In Figure 8C an angular position of a rotor of a salient-pole permanent magnet electrical machine after a second signal injection i.e., the electrical position of the shaft is 62 degrees $\theta_{PM}$ = 62°. Respectively, the angle of the permanent magnet flux axis $\hat{\theta}_{d,axis,2}$ is 242 degrees $\hat{\theta}_{d,axis,2}$ = 242°. In the final step of the method of the present invention the initial the initial angular position $\hat{\theta}_{init}$ of a rotor of a salient-pole permanent magnet electrical machine is determined as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases},$$

this giving us the result that the initial angular position $\hat{\theta}_{init}$ of the rotor is 62 degrees $\hat{\theta}_{init}$ = 62°.

With the help of the solution for determining an initial angular position of a rotor of a salient-pole permanent magnet electrical machine according to the present invention the previously presented problems of 180 degrees misalignment of the initial angular position of a rotor of a salient-pole permanent magnet electrical machine and DC parking behavior of the rotor shaft are solved and/or reduced.

In the of the present solution, a two-phase current measurement sensor or a three-phase current measurement sensor for measuring the current in the direction of the pulse is not needed. In the present solution, a single DC link current sensor is sufficient to measure the current in the direction of the pulse.

The solution according to the present invention provides an effective and elegant solution for determining an initial angular position of a rotor of a salient-pole permanent magnet electrical machine. In the present solution, a single DC link current sensor is sufficient to measure the current in the direction of the pulse. The presented solution is more effective compared to the prior solutions and also eliminates the need for phase current measurements so that the use of a two-phase current measurement sensor or of a three-phase current measurement sensor is not required.

The invention can be implemented in existing frequency converters. Present frequency converters comprise processors and memory that can be utilized in the functions according to embodiments of the invention. Thus, all modifications and configurations required for implementing an embodiment of the invention may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

**Claims**

1. A method for determining an initial angular position of a rotor of a salient-pole permanent magnet electrical machine connected to a frequency converter, in which method:

   - a first signal injection step is performed, in which first signal injection step an initial angle of the permanent magnet flux axis $\theta_{d,axis,1}$ is determined;
   - a DC injection (12) is performed, in which DC injection (12) a direct current is injected into an idle salient-pole permanent magnet electrical machine to a DC injection direction $\theta_{DC,dir} = \theta_{d,axis,1} \pm \theta_{add}$, where DC injection direction $\theta_{DC,dir}$ is the angle of injected direct current and added angle $\theta_{add}$ is an angle defining the shift from the initial angle of the permanent magnet flux axis $\theta_{d,axis,1}$;
   - a second signal injection step is performed, in which second signal injection step an angle of the permanent magnet flux axis $\theta_{d,axis,2}$ is determined; and
   - the initial angular position $\hat{\theta}_{init}$ of a rotor of a salient-pole permanent magnet electrical machine is determined (16) as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases}.$$

2. A method according to claim 1, in which method:

   - in said first signal injection step a first pulse test (11) is performed, in which first pulse test (11) number of external pulses are injected into an idle salient-pole permanent magnet electrical machine at selected angles, the ratio of the current to the flux is measured for each injected pulse, and the initial angle of the permanent magnet flux axis $\theta_{d,axis,1}$ is determined by performing a discrete Fourier transform (DFT, discrete Fourier transform) on the measured ratios; and

- in said second signal injection step a second pulse test (13) is performed, in which second pulse test (13) number of external pulses are injected into an idle salient-pole permanent magnet electrical machine at selected angles, the ratio of the current to the flux is measured for each injected pulse, and the angle of the permanent magnet flux axis $\theta_{d,axis,2}$ is determined by performing a discrete Fourier transform (DFT, discrete Fourier transform) on the measured ratios.

3. A method according to claim 1 or claim 2, wherein in said first signal injection step said initial angle of the permanent magnet flux axis $\theta_{d,axis,1}$ is determined by utilizing AC injection and/or wherein in said second signal injection step said angle of the permanent magnet flux axis $\theta_{d,axis,2}$ is determined by utilizing AC injection.

4. A method according to claim 1 or claim 2, wherein in said first signal injection step said initial angle of the permanent magnet flux axis $\theta_{d,axis,1}$ is determined by utilizing voltage pulses signal injection and/or wherein in said second signal injection step said angle of the permanent magnet flux axis $\theta_{d,axis,2}$ is determined by utilizing voltage pulses signal injection.

5. A method according to claim 1 or claim 2, wherein in said first signal injection step said initial angle of the permanent magnet flux axis $\theta_{d,axis,1}$ is determined by utilizing sinusoidal high-frequency (HF) signal injection or high-frequency (HF) square wave signal injection and/or wherein in said second signal injection step said angle of the permanent magnet flux axis $\theta_{d,axis,2}$ is determined by utilizing sinusoidal high-frequency (HF) signal injection or high-frequency (HF) square wave signal injection.

6. A method according to any of the claims 1-5, wherein said added angle $\theta_{add}$ is 90 degrees.

7. A method according to any of the claims 1-5, wherein said added angle $\theta_{add}$ is between 50 - 130 degrees.

8. A method according to any of the claims 1-5, wherein said added angle $\theta_{add}$ is between 30 - 150 degrees.

9. A method according to any of the claims 2-8, wherein said first pulse test (11) and/or said second pulse test (13) is/are performed as a six-pulse test, in which six-pulse test the ratio of the current to the flux is measured with the pulses at angles of 0, 60, 120, 180, 240 and 300 degrees.

10. A method according to claim 9, wherein six voltage pulses are produced in an order that minimizes the possibility of rotating the rotor of the salient-pole permanent magnet electrical machine.

11. A frequency converter adapted to be connected to a salient-pole permanent magnet electrical machine, the frequency converter comprising means configured to determine an initial angular position of a rotor of a salient-pole permanent magnet electrical machine by:

- performing a first signal injection step, in which first signal injection step an initial angle of the permanent magnet flux axis $\theta_{d,axis,1}$ is determined;
- performing a DC injection (12), in which DC injection (12) a direct current is injected into an idle salient-pole permanent magnet electrical machine to a DC injection direction $\theta_{DC,dir} = \theta_{d,axis,1} \pm \theta_{add}$, where DC injection direction $\theta_{DC,dir}$ is the angle of injected direct current and added angle $\theta_{add}$ is an angle defining the shift from the initial angle of the permanent magnet flux axis $\theta_{d,axis,1}$;
- performing a second signal injection step, in which second signal injection step an angle of the permanent magnet flux axis $\theta_{d,axis,2}$ is determined; and
- determining the initial angular position $\hat{\theta}_{init}$ of a rotor of a salient-pole permanent magnet electrical machine as:

$$\hat{\theta}_{init} = \begin{cases} \hat{\theta}_{d,axis,2}, & 180° - \left| \left| \hat{\theta}_{d,axis,2} - \theta_{DC,dir} \right| - 180° \right| \leq 90° \\ \hat{\theta}_{d,axis,2} - 180°, & otherwise \end{cases}.$$

12. A frequency converter according to claim 11, wherein

- in performing said first signal injection step said frequency converter comprises means configured to perform a first pulse test (11), in which first pulse test (11) number of external pulses are injected into an idle salient-pole permanent magnet electrical machine at selected angles, the ratio of the current to the flux is measured for each injected pulse, and the initial angle of the permanent magnet flux axis $\theta_{d,axis,1}$ is determined by performing a discrete Fourier transform (DFT, discrete Fourier transform) on the measured ratios; and
- in performing said second signal injection step said frequency converter comprises means configured to perform a second pulse test (13), in which second pulse test (13) number of external pulses are injected into an idle salient-pole permanent magnet electrical machine at selected angles, the ratio of the current to the flux is measured for each injected pulse, and the angle of the permanent magnet flux axis $\theta_{d,axis,2}$ is determined by performing a discrete Fourier transform (DFT, discrete Fourier transform) on the measured ratios.

13. A frequency converter according to claim 11 or to claim 12, wherein in performing said first signal injection step said frequency converter comprises means configured to determine said initial angle of the permanent magnet flux axis $\theta_{d,axis,1}$ utilizing AC injection, voltage pulses signal injection, sinusoidal high-frequency (HF) signal injection or high-frequency (HF) square wave signal injection and/or wherein in performing said second signal injection step said frequency converter comprises means configured to determine said angle of the permanent magnet flux axis $\theta_{d,axis,2}$ utilizing AC injection, voltage pulses signal injection, sinusoidal high-frequency (HF) signal injection or high-frequency (HF) square wave signal injection.

14. A frequency converter according to any of the claims 11-13, wherein said first pulse test (11) and/or said second pulse test (13) is/are performed as a six-pulse test, in which six-pulse test the ratio of the current to the flux is measured with the pulses at angles of 0, 60, 120, 180, 240 and 300 degrees.

15. A computer program product comprising computer program code, wherein the execution of the program code in a computer causes the computer of a frequency converter according to claim 11 causes the computer to carry out the steps of the method according to any one of claims 1 to 10.

$\Theta_{PM}=36°$

DC INJECTION

Fig. 1A

$\Theta_{PM}=74°$

DC INJECTION

Fig. 1B

$\Theta_{PM}=158°$

DC INJECTION

## Fig. 2A

DC INJECTION

$\Theta_{PM}=289°$

## Fig. 2B

$\Theta_{PM}=180°$  DC INJECTION

## Fig. 3A

$\Theta_{PM}=180°$  DC INJECTION

## Fig. 3B

```
            ┌─────────────┐
            │    START    │
            └──────┬──────┘
                   │
                   ▼
   ┌───────────────────────────────┐
   │     FIRST SIGNAL INJECTION    │————— 11
   └───────────────┬───────────────┘
                   │
                   ▼
   ┌───────────────────────────────┐
   │    DIRECT CURRENT INJECTION   │————— 12
   └───────────────┬───────────────┘
                   │
                   ▼
   ┌───────────────────────────────┐
   │    SECOND SIGNAL INJECTION    │————— 13
   └───────────────┬───────────────┘
                   │
                   ▼
   ┌───────────────────────────────┐
   │      DETERMINING ROTOR        │————— 16
   │   INITIAL ANGULAR POSITION    │
   └───────────────┬───────────────┘
                   │
                   ▼
            ┌─────────────┐
            │     END     │
            └─────────────┘
```

# Fig. 4

Fig. 5

Fig. 6

$\Theta_{add}=90°$    $\Theta_{PM}=72°$

$\hat{\Theta}_{d,axis,1}\approx72°$

DC INJECTION
$\Theta_{DC,dir}=162°$

## Fig. 7A

$\Theta_{add}=90°$    $\Theta_{PM}=72°$

DC INJECTION
$\Theta_{DC,dir}=162°$

## Fig. 7B

$\Theta_{PM}=81°$

$\hat{\Theta}_{d,axis,2}\approx81°$

## Fig. 7C

$\Theta_{PM}=72°$

$\Theta_{add}=90°$

DC INJECTION
$\Theta_{DC,dir}=342°$

$\hat{\Theta}_{d,axis,1}\approx252°$

## Fig. 8A

$\Theta_{PM} = 72°$

$\Theta_{add} = 90°$

DC INJECTION
$\Theta_{DC,dir} = 342°$

## Fig. 8B

$\Theta_{PM} = 62°$

$\hat{\Theta}_{d,axis,2} \approx 242°$

## Fig. 8C

Europäisches
Patentamt

European
Patent Office

Office européen
des brevets

# EUROPEAN SEARCH REPORT

**Application Number**

EP 23 20 5829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 108 551 284 B (SHENZHEN LYTRAN TECH CO LTD) 17 December 2019 (2019-12-17)<br>* paragraph [0006] - paragraph [0009]; claim 1 * | 1-15 | INV.<br>H02P21/32<br>H02P21/18<br>H02P6/18 |
| Y | CN 102 832 865 B (UNIV NANJING AERONAUTICS) 10 December 2014 (2014-12-10)<br>* paragraph [0060] - paragraph [0062]; claim 1 * | 1-15 | |
| A | US 6 401 875 B1 (MARVIN DARYL J [US] ET AL) 11 June 2002 (2002-06-11)<br>* abstract; claims 1-7; figures 5,6,7 *<br>* column 6, line 21 - line 30 * | 1-15 | |
| A | US 2015/057970 A1 (FEUERSAENGER SIMON [DE] ET AL) 26 February 2015 (2015-02-26)<br>* the whole document * | 1-15 | |

**TECHNICAL FIELDS SEARCHED (IPC)**

H02P

The present search report has been drawn up for all claims

| Place of search | Date of completion of the search | Examiner |
|---|---|---|
| Munich | 15 March 2024 | Koteich, Mohamad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 5829

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | Publication date | Patent family member(s) | | Publication date |
|---|---|---|---|---|---|
| CN 108551284 | B | 17-12-2019 | NONE | | |
| CN 102832865 | B | 10-12-2014 | NONE | | |
| US 6401875 | B1 | 11-06-2002 | BR | 0206246 A | 17-02-2004 |
| | | | CN | 1491478 A | 21-04-2004 |
| | | | EP | 1410492 A2 | 21-04-2004 |
| | | | ES | 2343676 T3 | 06-08-2010 |
| | | | JP | 4121855 B2 | 23-07-2008 |
| | | | JP | 2004519189 A | 24-06-2004 |
| | | | KR | 20030074723 A | 19-09-2003 |
| | | | TW | 530026 B | 01-05-2003 |
| | | | US | 6401875 B1 | 11-06-2002 |
| | | | WO | 02065139 A2 | 22-08-2002 |
| US 2015057970 | A1 | 26-02-2015 | CN | 104426447 A | 18-03-2015 |
| | | | EP | 2843828 A1 | 04-03-2015 |
| | | | US | 2015057970 A1 | 26-02-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3220535 B1